# EUROPEAN PATENT SPECIFICATION

(11) **EP 3 427 116 B1**
(45) Date of publication and mention of the grant of the patent: **06.05.2020**
(21) Application number: 17714931.7
(22) Date of filing: 02.03.2017
(51) Int. Cl.: G05B 19/418, G06Q 10/08, G06Q 50/28

(54) **METHOD AND SYSTEM OF ANALYZING AND CONTROLLING A COLD CHAIN SYSTEM**
VERFAHREN UND SYSTEM ZUR ANALYSE UND STEUERUNG EINES KÜHLKETTENSYSTEMS
PROCÉDÉ ET SYSTÈME D'ANALYSE ET DE COMMANDE D'UN SYSTÈME DE CHAÎNE DU FROID

(30) Priority: 09.03.2016 US 201662305863 P
(43) Date of publication of application: 16.01.2019
(73) Proprietor: Carrier Corporation, Farmington, Connecticut 06032 (US)
(72) Inventor: CRONIN, John, Williston, Vermont 05495 (US); BODKIN, Joseph George, Williston, Vermont 05495 (US)
(74) Representative: Dehns
(86) International application number: PCT/US2017/020363
(87) International publication number: WO 2017/155775

(56) References cited:
- DAESIK KO ET AL: "Design of Smart Cold Chain Application Framework Based on Hadoop and Spark", INTERNATIONAL JOURNAL OF SOFTWARE ENGINEERING AND ITS APPLICATIONS, vol. 9, no. 12, 31 December 2015 (2015-12-31), pages 99-106, XP055369515, ISSN: 1738-9984, DOI: 10.14257/ijseia.2015.9.12.08
- Gemalto: "The Benefits of a Cloud-Based, Real-Time, M2M-enabled Cold Chain", , 30 April 2013 (2013-04-30), pages 1-8, XP055369522, Retrieved from the Internet: URL:http://iotbusinessnews.com/download/Ge malto-White-Paper-Cold-Chain.pdf [retrieved on 2017-05-04]
- ABEL AVITESH CHANDRA ET AL: "A Method of WSN and Sensor Cloud System to Monitor Cold Chain Logistics as Part of the IoT Technology", INTERNATIONAL JOURNAL OF MULTIMEDIA AND UBIQUITOUS ENGINEERING, vol. 9, no. 10, 31 October 2014 (2014-10-31), pages 145-152, XP055369559, KR ISSN: 1975-0080, DOI: 10.14257/ijmue.2014.9.10.15

## Description

### BACKGROUND

The present disclosure relates to a cold chain system and more specifically, to methods, systems, and computer program products for analyzing and controlling the cold chain system.

A cold chain is a temperature-controlled supply chain. Particularly, a cold chain is an unbroken and uninterrupted series of storage and distribution activities which maintain a given temperature range for product being moved along the chain. For example, a cold chain is used to help extend and ensure the shelf life of products such as fresh agricultural produce, seafood, frozen food, film, fluids, chemicals, pharmaceutical drugs, and other temperature sensitive items.

A current issue with cold chain implementations is a communication, and control disconnect that is present between the various stages of a cold chain. Additionally, the cold chain implementations include an inability to monitor and control aspects of the cold chain as a whole. There are many systems and methods of collecting data for the multiple stages individually but there is not a universal system to use and analyze this data in an organized fashion.

Accordingly, there is desire for a system and method for collecting, analyzing, and controlling a cold chain system.

Daesik Ko et al. "Designs of Smart Cold Chains Application Framework Based on Hadoop and Spark" discloses a cold chain control system including sensors and a network for analyzing data and assessing risks accordingly.

### SUMMARY

In accordance with an embodiment, a method of analyzing and controlling a cold chain system is provided. The method includes collecting sensor data using a plurality of sensors provided at a plurality of stages of the cold chain system, loading sensor hub analysis network software onto at least one of a plurality of sensor modules, wherein at least one of the plurality of sensor modules is provided for each of the plurality of stages, receiving the sensor data at the plurality of sensor modules from the plurality of sensors, receiving the sensor data at a sensor hub analysis network from the plurality of sensor modules, analyzing the sensor data at the sensor hub analysis network, generating, using the sensor hub analysis network, a control recommendation signal based on the analyzed sensor data, and receiving the control recommendation signal in at least one of the plurality of sensor modules using the sensor hub analysis network software, wherein loading sensor hub analysis network software onto at least one of the plurality of sensor modules includes polling continuously, using sensor hub analysis network base software loaded on the sensor hub analysis network, for a connection to a sensor module of the plurality of sensor modules, connecting to the sensor module in response to detecting the connection to the sensor module during polling, receiving a request from the sensor module to load sensor hub analysis network software in response to connecting to the sensor module, transmitting the sensor hub analysis network software to the sensor module in response to receiving the request, and installing the sensor hub analysis network software on the sensor module in response to receiving the sensor hub analysis network software.

In accordance with another embodiment, the cold chain system is controlled locally at one of the plurality of stages based on the control recommendation signal, or is controlled at a cloud level by the sensor hub analysis network using the sensor hub analysis network software and the plurality of sensor modules based on the control recommendation signal.

In accordance with another embodiment, the method, further includes updating, using the sensor hub analysis network, the sensor hub analysis network software based on the sensor data that has been received and analyzed.

In accordance with another embodiment, the plurality of sensors includes one or more of a temperature sensor, a vibration sensor, a liquid detection sensor, a light sensor, a sound sensor, and a pressure sensor.

In accordance with another embodiment, the plurality of stages includes one or more of a packaging stage, a transportation stage, a storage stage, a destination stage, and an air conditioner stage.

In accordance with another embodiment, the packaging stage includes one or more of transport packaging, distribution packaging, consumer packaging, primary packaging, secondary packaging, tertiary packaging, crates, pallets, boxes, bags, and individual product packaging, wherein the transportation stage includes one or more of a watercraft, aircraft, vehicle, semi-trailer truck, and train, and wherein the storage stage includes one or more of a storage facility, warehouse, and storage unit.

According to an embodiment a cold chain control system for analyzing and controlling a cold chain system is provided. The system includes one or more processors in communication with one or more types of computer readable storage mediums having program instructions embodied therewith, the program instructions executable by the one or more processors to execute the above-mentioned method.

In accordance with another embodiment, the computer readable storage medium includes additional program instructions embodied therewith, wherein the additional program instructions executable by the one or more processors to cause the processors to display one or more of the sensor data, the analyzed sensor data, and the control recommendation signal to a user of the cold chain system, and update, using the sensor hub analysis network, the sensor hub analysis network software based on the sensor data that has been received and analyzed.

In accordance with an embodiment, a cold chain system is provided. The system includes a plurality of sensors provided at a plurality of stages of the cold chain system, a plurality of sensor modules loaded with sensor hub analysis software and connected to the plurality of sensors, wherein at least one of the plurality of sensor modules is provided for each of the plurality of stages, and wherein the plurality of sensor modules receive sensor data from the plurality of sensors, and a sensor hub analysis network connected to the plurality of sensor modules through a network, wherein the sensor hub analysis network receives and analyzes the sensor data from the plurality of sensor modules, wherein the sensor hub analysis network generates a control recommendation signal based on the sensor data, and wherein the control recommendation signal is transmitted to the plurality of sensor modules; wherein loading sensor hub analysis network software onto at least one of the plurality of sensor modules includes polling continuously, using sensor hub analysis network base software loaded on the sensor hub analysis network, for a connection to a sensor module of the plurality of sensor modules, connecting to the sensor module in response to detecting the connection to the sensor module during polling, receiving a request from the sensor module to load sensor hub analysis network software in response to connecting to the sensor module, transmitting the sensor hub analysis network software to the sensor module in response to receiving the request, and installing the sensor hub analysis network software on the sensor module in response to receiving the sensor hub analysis network software.

In accordance with another embodiment, the cold chain system is controlled locally at one of the plurality of stages based on the control recommendation signal, or is controlled at a cloud level by the sensor hub analysis network using the sensor hub analysis network software and the plurality of sensor modules based on the control recommendation signal.

In accordance with another embodiment, the cold chain system further includes a display configured to display one or more of the sensor data, the analyzed sensor data, and the control recommendation signal to a user of the cold chain system.

In accordance with another embodiment, the cold chain system further includes updated sensor hub analysis network software that is updated using the sensor hub analysis network based on the sensor data that has been received and analyzed.

In accordance with another embodiment, the plurality of sensors includes one or more of a temperature sensor, a vibration sensor, a liquid detection sensor, a light sensor, a sound sensor, and a pressure sensor.

In accordance with another embodiment, the plurality of stages includes one or more of a packaging stage, a transportation stage, a storage stage, a destination stage, and an air conditioner stage.

In accordance with another embodiment, the packaging stage includes one or more of transport packaging, distribution packaging, consumer packaging, primary packaging, secondary packaging, tertiary packaging, crates, pallets, boxes, bags, and individual product packaging, wherein the transportation stage includes one or more of a watercraft, aircraft, vehicle, semi-trailer truck, and train, and wherein the storage stage includes one or more of a storage facility, warehouse, and storage unit.

In accordance with another embodiment, the sensor hub analysis network is deployed using cloud infrastructure that includes a server connected over a cloud computing network to the plurality of sensor modules.

### BRIEF DESCRIPTION OF THE DRAWINGS

The foregoing and other features, and advantages of the present disclosure are apparent from the following detailed description taken in conjunction with the accompanying drawings in which:
FIG. 1 depicts a cloud computing environment according to an embodiment of the present disclosure;
FIG. 2 depicts abstraction model layers according to an embodiment of the present disclosure;
FIG. 3 is a block diagram illustrating one example of a processing system for practice of the teachings herein;
FIG. 4 depicts a cold chain system in accordance with an embodiment of the present disclosure;
FIG. 5 depicts a block diagram of an overall system in accordance with an embodiment of the present disclosure;
FIG. 6 depicts a block diagram of sensor hub analysis network base software in accordance with an embodiment of the present disclosure;
FIG. 7 depicts a block diagram of sensor module base software in accordance with an embodiment of the present disclosure;
FIG. 8 depicts a flow chart of a method of analyzing and controlling a cold chain system in accordance with an embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

It is understood in advance that although this disclosure includes a detailed description on cloud computing, implementation of the teachings recited herein are not limited to a cloud computing environment. Rather, embodiments of the present disclosure are capable of being implemented in conjunction with any other type of computing environment now known or later developed.

Cloud computing is a model of service delivery for enabling convenient, on-demand network access to a shared pool of configurable computing resources (e.g. networks, network bandwidth, servers, processing, memory, storage, applications, virtual machines, and services) that can be rapidly provisioned and released with minimal management effort or interaction with a provider of the service. This cloud model may include at least five characteristics, at least three service models, and at least four deployment models.

Characteristics are as follows:
On-demand self-service: a cloud consumer can unilaterally provision computing capabilities, such as server time and network storage, as needed automatically without requiring human interaction with the service's provider.
Broad network access: capabilities are available over a network and accessed through standard mechanisms that promote use by heterogeneous thin or thick client platforms (e.g., mobile phones, laptops, and PDAs).
Resource pooling: the provider's computing resources are pooled to serve multiple consumers using a multi-tenant model, with different physical and virtual resources dynamically assigned and reassigned according to demand. There is a sense of location independence in that the consumer generally has no control or knowledge over the exact location of the provided resources but may be able to specify location at a higher level of abstraction (e.g., country, state, or datacenter).
Rapid elasticity: capabilities can be rapidly and elastically provisioned, in some cases automatically, to quickly scale out and rapidly released to quickly scale in. To the consumer, the capabilities available for provisioning often appear to be unlimited and can be purchased in any quantity at any time.
Measured service: cloud systems automatically control and optimize resource use by leveraging a metering capability at some level of abstraction appropriate to the type of service (e.g., storage, processing, bandwidth, and active user accounts). Resource usage can be monitored, controlled, and reported providing transparency for both the provider and consumer of the utilized service.

Service Models are as follows:
Software as a Service (SaaS): the capability provided to the consumer is to use the provider's applications running on a cloud infrastructure. The applications are accessible from various client devices through a thin client interface such as a web browser (e.g., web-based e-mail). The consumer does not manage or control the underlying cloud infrastructure including network, servers, operating systems, storage, or even individual application capabilities, with the possible exception of limited user-specific application configuration settings.
Platform as a Service (PaaS): the capability provided to the consumer is to deploy onto the cloud infrastructure consumer-created or acquired applications created using programming languages and tools supported by the provider. The consumer does not manage or control the underlying cloud infrastructure including networks, servers, operating systems, or storage, but has control over the deployed applications and possibly application hosting environment configurations.
Infrastructure as a Service (IaaS): the capability provided to the consumer is to provision processing, storage, networks, and other fundamental computing resources where the consumer is able to deploy and run arbitrary software, which can include operating systems and applications. The consumer does not manage or control the underlying cloud infrastructure but has control over operating systems, storage, deployed applications, and possibly limited control of select networking components (e.g., host firewalls).

Deployment Models are as follows:
Private cloud: the cloud infrastructure is operated solely for an organization. It may be managed by the organization or a third party and may exist on-premises or off-premises.
Community cloud: the cloud infrastructure is shared by several organizations and supports a specific community that has shared concerns (e.g., mission, security requirements, policy, and compliance considerations). It may be managed by the organizations or a third party and may exist on-premises or off-premises.
Public cloud: the cloud infrastructure is made available to the general public or a large industry group and is owned by an organization selling cloud services.
Hybrid cloud: the cloud infrastructure is a composition of two or more clouds (private, community, or public) that remain unique entities but are bound together by standardized or proprietary technology that enables data and application portability (e.g., cloud bursting for load-balancing between clouds).

A cloud computing environment is service oriented with a focus on statelessness, low coupling, modularity, and semantic interoperability. At the heart of cloud computing is an infrastructure comprising a network of interconnected nodes.

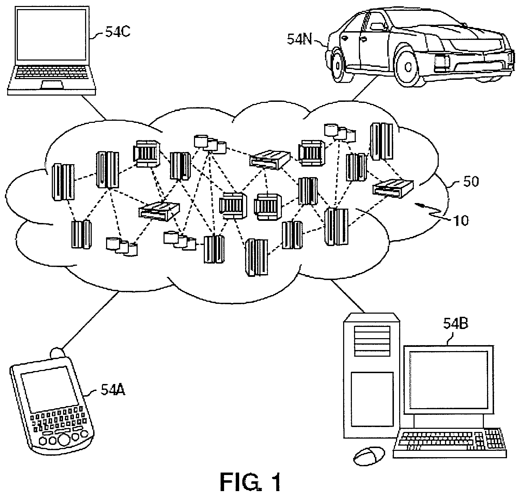

Referring now to Fig. 1, illustrative cloud computing environment 50 is depicted. As shown, cloud computing environment 50 comprises one or more cloud computing nodes 10 with which local computing devices used by cloud consumers, such as, for example, personal digital assistant (PDA) or cellular telephone 54A, desktop computer 54B, laptop computer 54C, and/or automobile computer system 54N may communicate. Nodes 10 may communicate with one another. They may be grouped (not shown) physically or virtually, in one or more networks, such as Private, Community, Public, or Hybrid clouds as described hereinabove, or a combination thereof. This allows cloud computing environment 50 to offer infrastructure, platforms and/or software as services for which a cloud consumer does not need to maintain resources on a local computing device. It is understood that the types of computing devices 54A-N shown in Fig. 1 are intended to be illustrative only and that computing nodes 10 and cloud computing environment 50 can communicate with any type of computerized device over any type of network and/or network addressable connection (e.g., using a web browser).

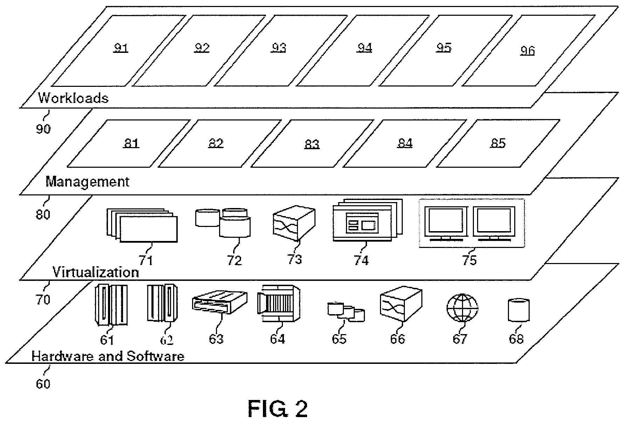

Referring now to Fig. 2, a set of functional abstraction layers provided by cloud computing environment 50 (Fig. 1) is shown. It should be understood in advance that the components, layers, and functions shown in Fig. 2 are intended to be illustrative only and embodiments of the disclosure are not limited thereto. As depicted, the following layers and corresponding functions are provided:

Hardware and software layer 60 includes hardware and software components. Examples of hardware components include: mainframes 61; RISC (Reduced Instruction Set Computer) architecture based servers 62; servers 63; blade servers 64; storage devices 65; and networks and networking components 66. In some embodiments, software components include network application server software 67 and database software 68.

Virtualization layer 70 provides an abstraction layer from which the following examples of virtual entities may be provided: virtual servers 71; virtual storage 72; virtual networks 73, including virtual private networks; virtual applications and operating systems 74; and virtual clients 75.

In one example, management layer 80 may provide the functions described below. Resource provisioning 81 provides dynamic procurement of computing resources and other resources that are utilized to perform tasks within the cloud computing environment. Metering and Pricing 82 provide cost tracking as resources are utilized within the cloud computing environment, and billing or invoicing for consumption of these resources. In one example, these resources may comprise application software licenses. Security provides identity verification for cloud consumers and tasks, as well as protection for data and other resources. User portal 83 provides access to the cloud computing environment for consumers and system administrators. Service level management 84 provides cloud computing resource allocation and management such that required service levels are met. Service Level Agreement (SLA) planning and fulfillment 85 provides pre-arrangement for, and procurement of, cloud computing resources for which a future requirement is anticipated in accordance with an SLA.

Workloads layer 90 provides examples of functionality for which the cloud computing environment may be utilized. Examples of workloads and functions which may be provided from this layer include: mapping and navigation 91; software development and lifecycle management 92; virtual classroom education delivery 93; data analytics processing 94; transaction processing 95; and processing of messages across multiple communication systems 96.

In accordance with exemplary embodiments of the disclosure, methods, systems and computer program products for prioritizing delivery of messages across multiple communication systems are provided. In exemplary embodiments, a messaging system is configured to receive messages for an individual across multiple communication systems utilized by the individual. The messaging system is also configured to determine a priority level associated with each of the messages based on an analysis of the messages and a user profile of the individual. Based on the determined priority level and the user profile, the messaging system delivers the messages to a desired communication device via a desired messaging system. In exemplary embodiments, the user profile is updated by the messaging system upon receiving feedback from the individual, wherein the feedback includes message delivery preferences and message priority preferences of the individual.

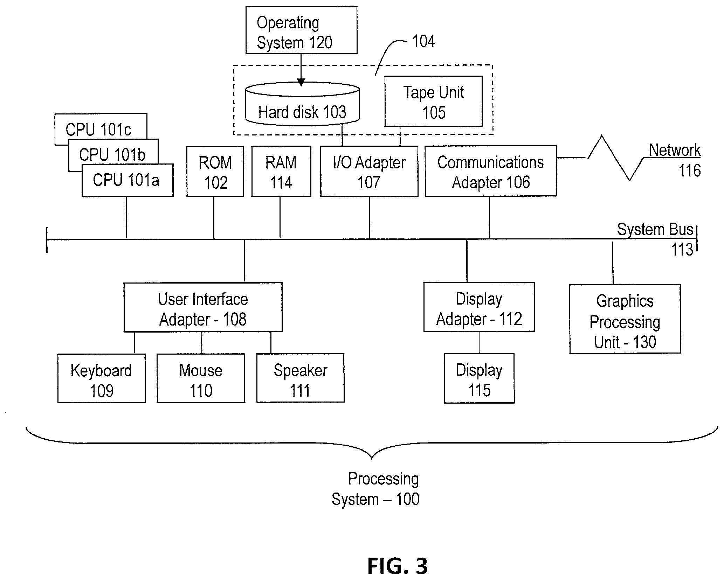

Referring to FIG. 3, there is shown an embodiment of a processing system 100 for implementing the teachings herein. In this embodiment, the system 100 has one or more central processing units (processors) 101a, 101b, 101c, etc. (collectively or generically referred to as processor(s) 101). In one embodiment, each processor 101 may include a reduced instruction set computer (RISC) microprocessor. Processors 101 are coupled to system memory 114 and various other components via a system bus 113. Read only memory (ROM) 102 is coupled to the system bus 113 and may include a basic input/output system (BIOS), which controls certain basic functions of system 100.

FIG. 3 further depicts an input/output (I/O) adapter 107 and a network adapter 106 coupled to the system bus 113. I/O adapter 107 may be a small computer system interface (SCSI) adapter that communicates with a hard disk 103 and/or tape storage drive 105 or any other similar component. I/O adapter 107, hard disk 103, and tape storage device 105 are collectively referred to herein as mass storage 104. Operating system 120 for execution on the processing system 100 may be stored in mass storage 104. A network adapter 106 interconnects bus 113 with an outside network 116 enabling data processing system 100 to communicate with other such systems. A screen (e.g., a display monitor) 115 is connected to system bus 113 by display adaptor 112, which may include a graphics adapter to improve the performance of graphics intensive applications and a video controller. In one embodiment, adapters 107, 106, and 112 may be connected to one or more I/O buses that are connected to system bus 113 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 113 via user interface adapter 108 and display adapter 112. A keyboard 109, mouse 110, and speaker 111 all interconnected to bus 113 via user interface adapter 108, which may include, for example, a Super I/O chip integrating multiple device adapters into a single integrated circuit.

In exemplary embodiments, the processing system 100 includes a graphics processing unit 130. Graphics processing unit 130 is a specialized electronic circuit designed to manipulate and alter memory to accelerate the creation of images in a frame buffer intended for output to a display. In general, graphics processing unit 130 is very efficient at manipulating computer graphics and image processing, and has a highly parallel structure that makes it more effective than general-purpose CPUs for algorithms where processing of large blocks of data is done in parallel.

Thus, as configured in FIG. 3, the system 100 includes processing capability in the form of processors 101, storage capability including system memory 114 and mass storage 104, input means such as keyboard 109 and mouse 110, and output capability including speaker 111 and display 115. In one embodiment, a portion of system memory 114 and mass storage 104 collectively store an operating system to coordinate the functions of the various components shown in FIG. 3.

According to one or more embodiments of the present disclosure, a method is provided that collects sensor data, analyzes the sensor data, and helps control the overall system. For example a method is provided in which sensor modules at each level of the cold chain can transmit the collected data and send the data to a network for it to be analyzed. Further, the method also includes operations for the sensor modules to load the software from the network in order to access the collected/analyzed sensor data, or metadata, and control the cold chain locally at a specific stage.

Providing overarching collecting, analysis, and control in accordance with the embodiments as disclosed is done in order to more efficiently control and analyze the massive amounts of data that is being collected from the various sensors used during the cold chain process. Such collection and analysis at a high level is provided in order to turn massive amounts of metadata into useful actions that can be controlled at the cloud or locally.

According to an embodiment, for example, a sensor hub module for each stage of the cold chain is provided in order transmit the data to a network. The network analyzes the data from all the aspects of the cold chain and provides recommendations back to the sensor hub module.

Further, according to one or more embodiments, the sensor data from the various stages of the cold chain is collected and is sent to an installed sensor module for that specific stage of the cold chain. The installed sensor module sends the collected data to the cloud or internet to a sensor hub analysis network where the data is stored, analyzed and can be viewed by users. The sensor hub analysis network software can be loaded onto the sensor modules in order to allow the cold chain to be controlled locally or at the cloud level. In the network the sensor hub analysis automatically recognizes the sensor module that is transmitting data.

One or more embodiments provide a method in which sensor modules at each level of the cold chain can transmit the collected data and send the data to a network for it to be analyzed, as well as a method for the sensor modules to load the necessary software from the network in order to access the collected metadata and control the cold chain locally at a specific stage.

According to another embodiment, a method includes providing sensor modules at each level of the cold chain that can transmit the collected data. The method also includes sending the data to a network for it to be analyzed. The method further provides that the sensor modules be loaded with software from the network in order to access the collected sensor metadata, and then the method controls the cold chain locally at a specific stage.

According to another embodiment, a cold chain system includes sensor modules at each stage of the cold chain for collecting data at their stage of a cold chain. The embodiment further includes sending the collected data to a network for analysis, accessing the collected data, and controlling the cold chain locally at a specific stage according to the data assessment. The sensor modules are loaded with the necessary software from the network in order to access the collected sensor data, or sensor metadata.

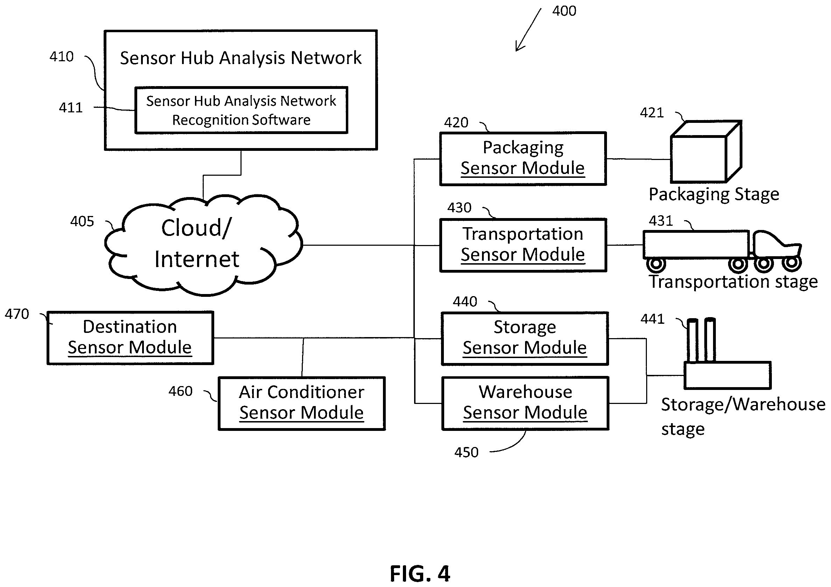

For example, FIG. 4 depicts a cold chain system 400 in accordance with one or more embodiments. As illustrated, the system 400 includes a network 405 that can be implemented as private/public cloud system and/or include connections through the internet. The cloud/internet network 405 is used to connected different elements of the cold chain system. Further the cold chain system 400 includes a plurality of stages such as a packing stage 421, a transportation stage 431, a storage/warehouse stage 441, as well as an air conditioner stage, and a destination stage. Each stage includes one or more sensors that collected data about the stage including equipment measurements as well as environmental values such as temperature, humidity, etc.

Further, each stage has a sensor module associated with the stage that is connected to the stage, and more particularly, to the sensors in each stage. For example, the cold chain system 400 includes a packing sensor module 420 that is connected to the packaging stage 421. The cold chain system 400 also includes a transportation sensor module 430 that is connected to the transportation stage 431. The cold chain system 400 also includes a storage sensor module 440, and may also include a warehouse sensor module 450, that are both connected to the storage/warehouse stage. Further, the cold chain system 400 includes an air condition sensor module 460 and a destination sensor module 470. All the sensor modules 420, 430, 440, 450, 460,470 are connected to each other and the cloud/internet 405.

The cold chain system 400 also includes a sensor hub analysis network 410 that includes a sensor hub analysis network recognition software 411, which can also be called sensor hub analysis network base software 411. The sensor hub analysis network 410 is connected to all the sensor modules 420, 430, 440, 450, 460,470 through the cloud/internet 405 are is configured to receive all the collected sensor data from the sensor modules 420, 430, 440, 450, 460,470 as well as provide and load sensor hub analysis network software onto each of the sensor modules.

For example, according to one or more embodiments, the sensor data from the various stages 421, 431, 441 of the cold chain is collected and is sent to an installed sensor module 420, 430, 440 for that specific stage of the cold chain. The installed sensor module 420, 430, 440 sends the collected data to the cloud or internet 405 to a sensor hub analysis network 410 where the data is stored, analyzed and can be viewed by users. The sensor hub analysis network software can be loaded onto the sensor modules 420, 430, 440 in order to allow the cold chain 400 to be controlled locally or at the cloud level. In the network the sensor hub analysis automatically recognizes the sensor module that is transmitting data.

Further, according to one or more embodiments, a software module that is included is the Sensor Hub Analysis Network Recognition Software 411 which resides on the network and is loaded down to a sensor module 420, 430, 440, 450, 460,470 upon request. Thus, according to an example, the transportation sensor module 430 requests from the sensor hub analysis network 410 the software 411 that is used for upload/down load and analysis of sensor data. The sensor hub analysis network 410 downloads the specific: Sensor Hub Analysis Network Recognition Software 411 for that sensor module 430 that may even be specific for the type of sensor module 430 (for example, there could be many types of transportation's sensor modules based upon truck type etc.). Once downloaded on the module 430 the software runs to extract local sensor data, transmits the collected sensor data to the sensor hub analysis network 410 for analysis and receives recommendations at the transportation sensor module 430 for the trucker (in this example in the transportation stage 431) to understand and get recommendations (if any). After this, data may be exchanged based upon the local sensor data and any recommendations followed (not shown).

According to one or more embodiments, storing many Sensor Hub Analysis Network Recognition Software versions is done on the network such that the Sensor Hub Analysis Network Recognition Software is continually changed and updated at one central location by programmers and administrators that are seeing changes from the various sensor modules in the cold chain. For instance, the packaging sensor module 420 may provide a shorter limit of transportation time (as a recommendation) fed to the network 410, so when the transportation sensor module 430 receives the new sensor data en route after the packaging sensor module 420 data is received, the Sensor Hub Analysis Network Recognition Software loaded down for the transportation sensor module 430 would take that packaging sensor module 420 recommendations and provide updated recommendations based upon the updated transportation sensor module 430. In this way, the cold chain sensor modules 420, 430, 440, 450, 460,470, along with the Sensor Hub Analysis Network Recognition Software 411 of the network 410, are configured to provide not only dynamic data capturing and analysis, but dynamic recommendations for performance of cold chain.

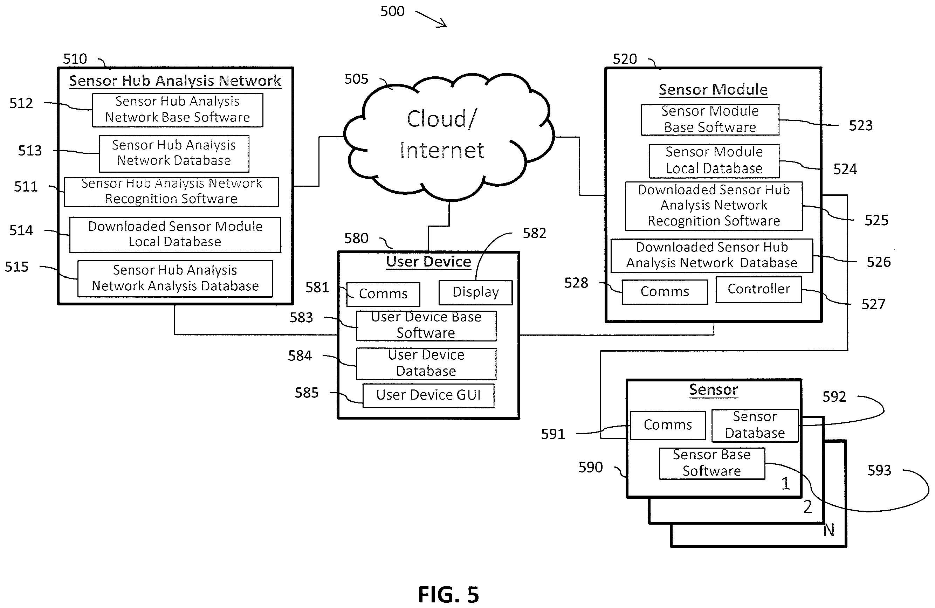

FIG. 5 depicts a block diagram of an overall cold chain system 500 in accordance with another embodiment. The cold chain system 500 includes a sensor hub analysis network 510, a user device 580, and a sensor module 520. The sensor hub analysis network 510, user device 580, and sensor module 520 are connected either directly or through a cloud or internet network element 505. The cold chain system also includes sensors 590-1, 590-2,590-N that are connected to the sensor module 520. The sensor module 520 can be a module associated with any stage of the cold chain system 500 including, for example, the packaging, transportation, storage/warehouse, air conditioner, or destination stages.

Further, looking specifically at the sensor hub analysis network 510 it can be appreciated that this element may include a number of sub-elements. Specifically, the sensor hub analysis network 510 may include sensor hub analysis network recognition software 511, as similarly shown in FIG. 4 that is provided to sensor modules 520 and can be updated over time. Further, multiple different version personalized to each type or each specific sensor module may also be created, stored, and provided. Further, the sensor hub analysis network 510 also includes a sensor hub analysis network base software 512 that provides instructions and operations for operating the sensor hub analysis network itself. Further, the sensor hub analysis network 510 includes a sensor hub analysis network database 513, a downloaded sensor module local database 514, and a sensor hub analysis network analysis database 515.

The sensor module 520 includes sensor module base software 523 and downloaded sensor hub analysis network recognition software 525. The sensor module 520 also includes a sensor module local database 524 and a downloaded sensor hub analysis network database 526. Further, the sensor module 520 includes a controller 527 and a communication device 528 that may include, for example, a receiver, transmitter, and/or transcei ver.

The user device 580 includes user device base software 583 as well as a user device database 584 and a user device graphical user interface (GUI) 585. The user device also includes a display 582 and a communication device 581 that may include, for example, a receiver, transmitter, and/or transceiver.

The sensors 590 (1, 2, N) may each include sensor base software 593 as well as a sensor database 592 and a communication device 591 that may include, for example, a receiver, transmitter, and/or transceiver.

In accordance with one or more embodiments, a cold chain system that includes the above described elements can be operated as follows. Particularly, sensor hub analysis network base software is continuously polling until a connection is made to a sensor module. Then, in response to connecting with the sensor module, the sensor hub analysis network base software receives a request from the sensor module to send the sensor hub analysis network recognition software and the sensor module receives the sensor hub analysis network recognition software. The sensor module runs the downloaded sensor hub analysis network recognition software which continuously polls for sensors in range. The recognition software connects to the sensor and receives the sensor information and data. The sensor module base software then stores the sensor data in the sensor module local database and sends the sensor module local database to the sensor hub analysis network base software and user device base software. The sensor hub analysis network base software compares the downloaded sensor hub module local database to the sensor hub analysis network analysis database. The relevant data is extracted from the sensor hub analysis network analysis database and stored in the sensor hub analysis network database with the downloaded sensor module local database. The sensor hub analysis network database is sent to the sensor module base software and user device base software. The user device base software receives the sensor hub analysis network database and sensor module local database in order to give the user options through the user device graphical user interface (GUI) to control various aspects of the cold chain either through the network in the cloud or locally through the sensor module. The sensor module base software receives the sensor hub analysis network database and extracts the recommendations. The extracted recommendations are sent to the sensor module controller and the process returns to the sensor module running the downloaded sensor hub analysis network recognition software.

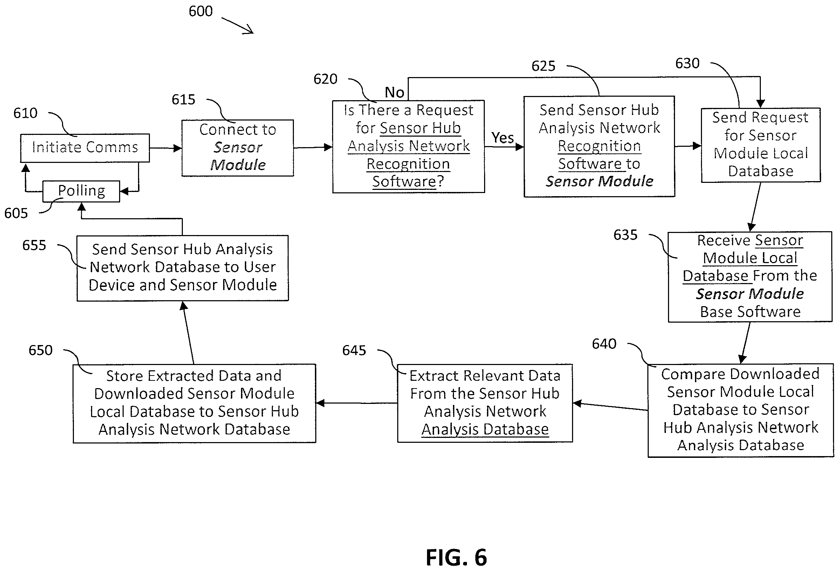

FIG. 6 depicts a block diagram of sensor hub analysis network base software 600 in accordance with an embodiment. In accordance with one or more embodiments, the sensor hub analysis network base software is continuously polling (operations 605 and 610) for a connection to a sensor module and once a connection is made (operation 615) determines if there is a request for the sensor hub analysis network recognition software (operation 620). If there is a request the sensor hub analysis network recognition software is sent to the sensor module base software (operation 625), and if there is no request the process skips ahead to sending a request to the sensor module base software for the sensor module local database (operation 630). The sensor hub analysis network base software receives the sensor module local database from the sensor module base software (operation 635) and compares it to the sensor hub analysis network analysis database (operation 640). The relevant data is extracted from the sensor hub analysis network analysis database (operation 645) and is stored in the sensor hub analysis network database with the data from the downloaded sensor module local database (operation 650). The sensor hub analysis network base software sends the sensor hub analysis network database to the user device and sensor module (operation 655).

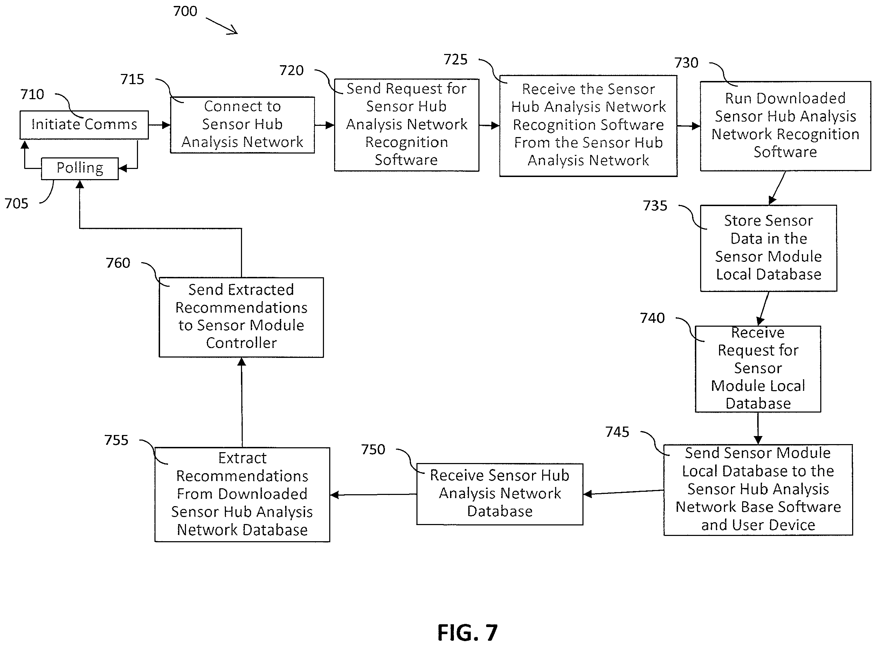

FIG. 7 depicts a block diagram of sensor module base software 700 in accordance with one or more embodiment. The sensor module base software 700 is continuously polling for a connection to the sensor hub analysis network (operations 705 and 710) and once a connection is made (operation 715) sends a request for the sensor hub analysis network recognition software (operation 720). The sensor module base software receives the sensor hub analysis network recognition software (operation 725) and stores the software. Then the downloaded sensor hub analysis network recognition software is run (operation 730) and the data from the sensors is stored in the sensor module local database (operation 735). The sensor module base software receives a request for the sensor module local database (operation 740) and sends the database to the sensor hub analysis network base software and user device (operation 745). The sensor module base software receives the sensor hub analysis network database (operation 750) and extracts the recommendations from the downloaded sensor hub analysis network database (operation 755). The extracted recommendations are sent to the sensor module controller (operation 760) and the process returns to the sensor module base software running the downloaded sensor hub analysis network recognition software.

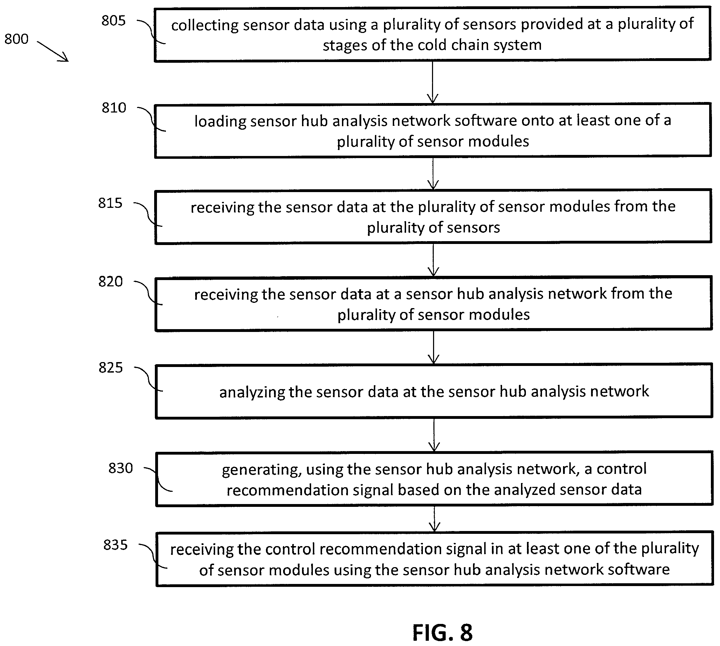

FIG. 8 is a flowchart of a method 800 of analyzing and controlling a cold chain system in accordance with one or more embodiments. The method 800 includes collecting sensor data using a plurality of sensors provided at a plurality of stages of the cold chain system (operation 805). The method 800 also includes loading sensor hub analysis network software onto at least one of a plurality of sensor modules, wherein at least one of the plurality of sensor modules is provided for each of the plurality of stages (operation 810). Further, the method 800 includes receiving the sensor data at the plurality of sensor modules from the plurality of sensors (operation 815) and receiving the sensor data at a sensor hub analysis network from the plurality of sensor modules (operation 820). The method 800 also includes analyzing the sensor data at the sensor hub analysis network (operation 825) and generating, using the sensor hub analysis network, a control recommendation signal based on the analyzed sensor data (operation 830). Finally, the method 800 includes receiving the control recommendation signal in at least one of the plurality of sensor modules using the sensor hub analysis network software (operation 835).

According to another embodiment, the cold chain system is controlled locally at one of the plurality of stages based on the control recommendation signal. According to another embodiment, the cold chain system is controlled at a cloud level by the sensor hub analysis network using the sensor hub analysis network software and the plurality of sensor modules based on the control recommendation signal.

According to another embodiment, the method further includes displaying one or more of the sensor data, the analyzed sensor data, and the control recommendation signal to a user of the cold chain system. According to another embodiment, the method further includes updating, using the sensor hub analysis network, the sensor hub analysis network software based on the sensor data that has been received and analyzed.

According to another embodiment, the method further includes polling continuously, using sensor hub analysis network base software loaded on the sensor hub analysis network, for a connection to a sensor module of the plurality of sensor modules, connecting to the sensor module in response to detecting the connection to the sensor module during polling, receiving a request from the sensor module to load sensor hub analysis network software in response to connecting to the sensor module, transmitting the sensor hub analysis network software to the sensor module in response to receiving the request, and installing the sensor hub analysis network software on the sensor module in response to receiving the sensor hub analysis network software.

According to another embodiment, the plurality of sensors includes one or more of a temperature sensor, a vibration sensor, a liquid detection sensor, a light sensor, a sound sensor, and a pressure sensor. According to another embodiment, the plurality of stages includes one or more of a packaging stage, a transportation stage, a storage stage, a destination stage, and an air conditioner stage.

According to another embodiment, the packaging stage includes one or more of transport packaging, distribution packaging, consumer packaging, primary packaging, secondary packaging, tertiary packaging, crates, pallets, boxes, bags, and individual product packaging. According to another embodiment, the transportation stage includes one or more of a watercraft, aircraft, vehicle, semi-trailer truck, and train. According to another embodiment, the storage stage includes one or more of a storage facility, warehouse, and storage unit.

According to another embodiment, the sensor hub analysis network is deployed using cloud infrastructure that includes a server connected over a cloud computing network to the plurality of sensor modules.

The present embodiment may be a system, a method, and/or a computer program product. The computer program product may include a computer readable storage medium (or media) having computer readable program instructions thereon for causing a processor to carry out aspects of the present embodiment.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method of analyzing and controlling a cold chain system (500), the method comprising:
collecting sensor data using a plurality of sensors (590) provided at a plurality of stages of the cold chain system;
loading sensor hub analysis network software (525) onto at least one of a plurality of sensor modules, wherein at least one of the plurality of sensor modules is provided for each of the plurality of stages;
receiving the sensor data at the plurality of sensor modules (520) from the plurality of sensors;
receiving the sensor data at a sensor hub analysis network (510) from the plurality of sensor modules;
analyzing the sensor data at the sensor hub analysis network;
generating, using the sensor hub analysis network, a control recommendation signal based on the analyzed sensor data; and
receiving the control recommendation signal in at least one of the plurality of sensor modules using the sensor hub analysis network software;
the method being **characterized in that**:
the loading sensor hub analysis network software (525) onto at least one of the plurality of sensor modules (520) comprises:
polling, using sensor hub analysis network base software (512) loaded on the sensor hub analysis network, for a connection to a sensor module (520) of the plurality of sensor modules;
connecting to the sensor module in response to detecting the connection to the sensor module during polling;
receiving a request from the sensor module to load sensor hub analysis network software in response to connecting to the sensor module;
transmitting the sensor hub analysis network software to the sensor module in response to receiving the request; and
installing the sensor hub analysis network software on the sensor module in response to receiving the sensor hub analysis network software.

2. The method of claim 1, wherein the cold chain system is controlled locally at one of the plurality of stages based on the control recommendation signal, or is controlled at a cloud level by the sensor hub analysis network using the sensor hub analysis network software and the plurality of sensor modules based on the control recommendation signal.

3. The method of claim 1, further comprising:
updating, using the sensor hub analysis network (510), the sensor hub analysis network software (512) based on the sensor data that has been received and analyzed.

4. The method of claim 1, wherein the plurality of sensors (590) includes one or more of a temperature sensor, a vibration sensor, a liquid detection sensor, a light sensor, a sound sensor, and a pressure sensor.

5. The method of claim 1, wherein the plurality of stages includes one or more of a packaging stage (421), a transportation stage (431), a storage stage (441), a destination stage, and an air conditioner stage.

6. The method of claim 5,
wherein the packaging stage (421) includes one or more of transport packaging, distribution packaging, consumer packaging, primary packaging, secondary packaging, tertiary packaging, crates, pallets, boxes, bags, and individual product packaging,
wherein the transportation stage (431) includes one or more of a watercraft, aircraft, vehicle, semi-trailer truck, and train, and
wherein the storage stage (441) includes one or more of a storage facility, warehouse, and storage unit.

7. A cold chain system (500) comprising:
a plurality of sensors (590) provided at a plurality of stages of the cold chain system;
a plurality of sensor modules (520) loaded with sensor hub analysis software (525) and connected to the plurality of sensors,
wherein at least one of the plurality of sensor modules is provided for each of the plurality of stages, and
wherein the plurality of sensor modules are adapted to receive sensor data from the plurality of sensors; and
a sensor hub analysis network (510) connected to the plurality of sensor modules through a network,
wherein the sensor hub analysis network is adapted to receive and analyze the sensor data from the plurality of sensor modules,
wherein the sensor hub analysis network is adapted to generate a control recommendation signal based on the sensor data and it is further adapted to transmit the control recommendation signal to the plurality of sensor modules;
**characterized in that**:
the loading sensor hub analysis network software (525) onto at least one of the plurality of sensor modules (520) comprises:
polling, using sensor hub analysis network base software (512) loaded on the sensor hub analysis network, for a connection to a sensor module (520) of the plurality of sensor modules;
connecting to the sensor module in response to detecting the connection to the sensor module during polling;
receiving a request from the sensor module to load sensor hub analysis network software in response to connecting to the sensor module;
transmitting the sensor hub analysis network software to the sensor module in response to receiving the request; and
installing the sensor hub analysis network software on the sensor module in response to receiving the sensor hub analysis network software.

8. The cold chain system (500) of claim 7, wherein the cold chain system is controlled locally at one of the plurality of stages based on the control recommendation signal, or is controlled at a cloud level by the sensor hub analysis network (510) using the sensor hub analysis network software (525) and the plurality of sensor modules (520) based on the control recommendation signal.

9. The cold chain system (500) of claim 7, further comprising:
updated sensor hub analysis network software that is updated using the sensor hub analysis network based on the sensor data that has been received and analyzed.

10. The cold chain system (500) of claim 7, wherein the plurality of sensors (590) includes one or more of a temperature sensor, a vibration sensor, a liquid detection sensor, a light sensor, a sound sensor, and a pressure sensor.

11. The cold chain system (500) of claim 7, wherein the plurality of stages includes one or more of a packaging stage (421), a transportation stage (431), a storage stage (441), a destination stage, and an air conditioner stage.

12. The cold chain system (500) of claim 11,
wherein the packaging stage (421) includes one or more of transport packaging, distribution packaging, consumer packaging, primary packaging, secondary packaging, tertiary packaging, crates, pallets, boxes, bags, and individual product packaging,
wherein the transportation stage (431) includes one or more of a watercraft, aircraft, vehicle, semi-trailer truck, and train, and
wherein the storage stage (441) includes one or more of a storage facility, warehouse, and storage unit.

13. The cold chain system (500) of claim 7, wherein the sensor hub analysis network (510) is deployed using cloud infrastructure (505) that includes a server connected over a cloud computing network to the plurality of sensor modules (590).

14. One or more computer readable storage mediums having program instructions embodied therewith, the program instructions being executable by one or more processors to cause the processors to execute the method of claim 1.

15. The one or more computer readable storage mediums of claim 14, wherein the computer readable storage medium includes additional program instructions embodied therewith, wherein the additional program instructions executable by the one or more processors (101) to cause the processors to:
display one or more of the sensor data, the analyzed sensor data, and the control recommendation signal to a user of the cold chain system (500); and
update, using the sensor hub analysis network (510), the sensor hub analysis network software (525) based on the sensor data that has been received and analyzed.

## Patentansprüche

1. Verfahren zum Analysieren und Steuern eines Kühlkettensystems (500), wobei das Verfahren Folgendes umfasst:
Sammeln von Sensordaten unter Verwendung einer Vielzahl von Sensoren (590), die an einer Vielzahl von Phasen des Kühlkettensystems bereitgestellt ist;
Laden von Sensor-Hub-Analyse-Netzwerksoftware (525) auf mindestens eines einer Vielzahl von Sensormodulen, wobei mindestens eines der Vielzahl von Sensormodulen für jede der Vielzahl von Phasen bereitgestellt ist;
Empfangen der Sensordaten an der Vielzahl von Sensormodulen (520) von der Vielzahl von Sensoren;
Empfangen der Sensordaten an einem Sensor-Hub-Analyse-Netzwerk (510) von der Vielzahl von Sensormodulen;
Analysieren der Sensordaten im Sensor-Hub-Analyse-Netzwerk;
Generieren eines Steuerempfehlungssignals auf Grundlage der analysierten Sensordaten unter Verwendung des Sensor-Hub-Analyse-Netzwerks; und
Empfangen des Steuerempfehlungssignals in mindestens einem der Vielzahl von Sensormodulen unter Verwendung der Sensor-Hub-Analyse-Netzwerksoftware;
wobei das Verfahren **dadurch gekennzeichnet ist, dass**:
das Laden der Sensor-Hub-Analyse-Netzwerksoftware (525) auf mindestens eines der Vielzahl von Sensormodulen (520) Folgendes umfasst:
Abrufen einer Verbindung mit einem Sensormodul (520) der Vielzahl von Sensormodulen unter Verwendung von Sensor-Hub-Analyse-Netzwerk-Basissoftware (512), die auf das Sensor-Hub-Analyse-Netzwerk geladen ist;
Verbinden mit dem Sensormodul als Reaktion auf das Erkennen der Verbindung mit dem Sensormodul während des Abrufs;
Empfangen einer Anfrage von dem Sensormodul, die Sensor-Hub-Analyse-Netzwerksoftware als Reaktion auf das Verbinden mit dem Sensormodul zu laden;
Übermitteln der Sensor-Hub-Analyse-Netzwerksoftware an das Sensormodul als Reaktion auf das Empfangen der Anfrage; und
Installieren der Sensor-Hub-Analyse-Netzwerksoftware auf dem Sensormodul als Reaktion auf das Empfangen der Sensor-Hub-Analyse-Netzwerksoftware.

2. Verfahren nach Anspruch 1, wobei das Kühlkettensystem lokal in einer der Vielzahl von Phasen auf Grundlage des Steuerempfehlungssignals gesteuert wird oder auf Cloud-Ebene durch das Sensor-Hub-Analyse-Netzwerk unter Verwendung der Sensor-Hub-Analyse-Netzwerksoftware und der Vielzahl von Sensormodulen auf Grundlage des Steuerempfehlungssignals gesteuert wird.

3. Verfahren nach Anspruch 1, ferner umfassend:
Aktualisieren der Sensor-Hub-Analyse-Netzwerksoftware (512) auf Grundlage der Sensordaten, die empfangen und analysiert wurden, unter Verwendung des Sensor-Hub-Analyse-Netzwerks (510).

4. Verfahren nach Anspruch 1, wobei die Vielzahl von Sensoren (590) einen oder mehrere eines Temperatursensors, eines Schwingungssensors, eines Flüssigkeitserkennungssensor, eines Lichtsensors, eines Schallsensors und eines Drucksensors beinhaltet.

5. Verfahren nach Anspruch 1, wobei die Vielzahl von Phasen eine oder mehrere einer Verpackungsphase (421), einer Transportphase (431), einer Lagerphase (441) einer Bestimmungsortphase und einer Klimatisierungsphase beinhaltet.

6. Verfahren nach Anspruch 5,
wobei die Verpackungsphase (421) eines oder mehreres von Transportverpackung, Lieferverpackung, Verbraucherverpackung, Primärverpackung, Sekundärverpackung, Tertiärverpackung, Kisten, Paletten, Schachteln, Beutel und einzelner Produktverpackung beinhaltet,
wobei die Transportphase (431) ein oder mehrere eines Wasserfahrzeugs, Flugzeugs, Fahrzeugs, Sattelschleppers und Zuges beinhaltet, und
wobei die Lagerphase (441) eines oder mehrere einer Lagereinrichtung, eines Warendepots und einer Lagereinheit beinhaltet.

7. Kühlkettensystem (500), umfassend:
eine Vielzahl von Sensoren (590), die in einer Vielzahl von Phasen des Kühlkettensystems bereitgestellt ist;
eine Vielzahl von Sensormodulen (520), auf die die Sensor-Hub-Analysesoftware (525) geladen ist und die mit der Vielzahl von Sensoren verbunden ist,
wobei mindestens eines der Vielzahl von Sensormodulen für jede der Vielzahl von Phasen bereitgestellt ist, und
wobei die Vielzahl von Sensormodulen dazu ausgelegt ist, Sensordaten von der Vielzahl von Sensoren zu empfangen; und
ein Sensor-Hub-Analyse-Netzwerk (510), das durch ein Netzwerk mit der Vielzahl von Sensormodulen verbunden ist,
wobei das Sensor-Hub-Analyse-Netzwerk dazu ausgelegt ist, die Sensordaten von der Vielzahl von Sensormodulen zu empfangen und zu analysieren,
wobei das Sensor-Hub-Analyse-Netzwerk dazu ausgelegt ist, ein Steuerempfehlungssignal auf Grundlage der Sensordaten zu generieren und ferner dazu ausgelegt ist, das Steuerempfehlungssignal an die Vielzahl von Sensormodulen zu übermitteln;
**dadurch gekennzeichnet, dass**:
das Laden der Sensor-Hub-Analyse-Netzwerksoftware (525) auf mindestens eines der Vielzahl von Sensormodulen (520) Folgendes umfasst:
Abrufen einer Verbindung mit einem Sensormodul (520) der Vielzahl von Sensormodulen unter Verwendung von Sensor-Hub-Analyse-Netzwerk-Basissoftware (512), die auf das Sensor-Hub-Analyse-Netzwerk geladen ist;
Verbinden mit dem Sensormodul als Reaktion auf das Erkennen der Verbindung mit dem Sensormodul während des Abrufs;
Empfangen einer Anfrage von dem Sensormodul, die Sensor-Hub-Analyse-Netzwerksoftware als Reaktion auf das Verbinden mit dem Sensormodul zu laden;
Übermitteln der Sensor-Hub-Analyse-Netzwerksoftware an das Sensormodul als Reaktion auf das Empfangen der Anfrage; und
Installieren der Sensor-Hub-Analyse-Netzwerksoftware auf dem Sensormodul als Reaktion auf das Empfangen der Sensor-Hub-Analyse-Netzwerksoftware.

8. Kühlkettensystem (500) nach Anspruch 7, wobei das Kühlkettensystem lokal in einer der Vielzahl von Phasen auf Grundlage des Steuerempfehlungssignals gesteuert wird oder auf einer Cloud-Ebene durch das Sensor-Hub-Analyse-Netzwerk (510) unter Verwendung der Sensor-Hub-Analyse-Netzwerksoftware (525) und der Vielzahl von Sensormodulen (520) auf Grundlage des Steuerempfehlungssignals gesteuert wird.

9. Kühlkettensystem (500) nach Anspruch 7, ferner umfassend:
aktualisierte Sensor-Hub-Analyse-Netzwerksoftware, die unter Verwendung des Sensor-Hub-Analyse-Netzwerks auf Grundlage der Sensordaten, die empfangen und analysiert wurden, aktualisiert wird.

10. Kühlkettensystem (500) nach Anspruch 7, wobei die Vielzahl von Sensoren (590) einen oder mehrere eines Temperatursensors, eines Schwingungssensors, eines Flüssigkeitserkennungssensors, eines Lichtsensors, eines Schallsensors und eines Drucksensors beinhaltet.

11. Kühlkettensystem (500) nach Anspruch 7, wobei die Vielzahl von Phasen eine oder mehrere einer Verpackungsphase (421), einer Transportphase (431), einer Lagerphase (441) einer Bestimmungsortphase und einer Klimatisierungsphase beinhaltet.

12. Kühlkettensystem (500) nach Anspruch 11,
wobei die Verpackungsphase (421) eines oder mehreres von Transportverpackung, Lieferverpackung, Verbraucherverpackung, Primärverpackung, Sekundärverpackung, Tertiärverpackung, Kisten, Paletten, Schachteln, Beuteln und einzelner Produktverpackung beinhaltet,
wobei die Transportphase (431) ein oder mehrere eines Wasserfahrzeugs, Flugzeugs, Fahrzeugs, Sattelschleppers und Zuges beinhaltet, und
wobei die Lagerphase (441) eines oder mehrere einer Lagereinrichtung, eines Warendepots und einer Lagereinheit beinhaltet.

13. Kühlkettensystem (500) nach Anspruch 7, wobei das Sensor-Hub-Analyse-Netzwerk (510) unter Verwendung von Cloud-Infrastruktur (505) eingesetzt wird, die einen Server beinhaltet, der über ein Cloud-Computing-Netzwerk mit der Vielzahl von Sensormodulen (590) verbunden ist.

14. Ein oder mehrere computerlesbare Speichermedien mit damit verkörperten Programmanweisungen, wobei die Programmanweisungen von einem oder mehreren Prozessoren ausführbar sind, um die Prozessoren dazu zu veranlassen, das Verfahren nach Anspruch 1 auszuführen.

15. Ein oder mehrere computerlesbare Speichermedien nach Anspruch 14, wobei das computerlesbare Speichermedium zusätzliche damit verkörperte Programmanweisungen beinhaltet, wobei die zusätzlichen Programmanweisungen durch den einen oder die mehreren Prozessoren (101) ausführbar sind, um den Prozessor zu Folgendem zu veranlassen:
Anzeigen von einem oder mehreren von den Sensordaten, den analysierten Sensordaten und dem Steuerempfehlungssignal gegenüber einem Benutzer des Kühlkettensystems (500); und
Aktualisieren des Sensor-Hub-Analyse-Netzwerksoftware (525) auf Grundlage der Sensordaten, die empfangen und analysiert wurden, unter Verwendung des Sensor-Hub-Analyse-Netzwerks (510).

## Revendications

1. Procédé d'analyse et de commande d'un système de chaîne du froid (500), le procédé comprenant :
la collecte de données de capteur en utilisant une pluralité de capteurs (590) fournis au niveau d'une pluralité d'étapes du système de chaîne du froid ;
le chargement du logiciel de réseau d'analyse de concentrateur de capteur (525) sur l'un au moins d'une pluralité de modules de capteur, dans lequel l'un au moins de la pluralité de modules de capteur est fourni pour chacune de la pluralité d'étapes ;
la réception des données de capteur au niveau de la pluralité de modules de capteur (520) depuis la pluralité de capteurs ;
la réception des données de capteur au niveau d'un réseau d'analyse de concentrateur de capteur (510) depuis la pluralité de modules de capteur ;
l'analyse des données de capteur au niveau du réseau d'analyse de concentrateur de capteur ;
la génération, en utilisant le réseau d'analyse de concentrateur de capteur, d'un signal de recommandation de commande sur la base des données de capteur analysées ; et
la réception du signal de recommandation de commande dans l'un au moins de la pluralité de modules de capteur en utilisant le logiciel de réseau d'analyse de concentrateur de capteur ;
le procédé étant **caractérisé en ce que** :
le chargement du logiciel de réseau d'analyse de concentrateur de capteur (525) sur l'un au moins de la pluralité de modules de capteur (520) comprend :
l'interrogation, en utilisant un logiciel de base de réseau d'analyse de concentrateur de capteur (512) chargé sur le réseau d'analyse de concentrateur de capteur, d'une connexion à un module de capteur (520) de la pluralité de modules de capteur ;
la connexion au module de capteur en réponse à la détection de la connexion au module de capteur pendant l'interrogation ;
la réception d'une demande de la part du module de capteur pour charger le logiciel de réseau d'analyse de concentrateur de capteur en réponse à la connexion au module de capteur ;
la transmission du logiciel de réseau d'analyse de concentrateur de capteur au module de capteur en réponse à la réception de la demande ; et
l'installation du logiciel de réseau d'analyse de concentrateur de capteur sur le module de capteur en réponse à la réception du logiciel de réseau d'analyse de concentrateur de capteur.

2. Procédé selon la revendication 1, dans lequel le système de chaîne du froid est commandé localement au niveau de l'une de la pluralité d'étapes sur la base du signal de recommandation de commande, ou est commandé au niveau du cloud par le réseau d'analyse de concentrateur de capteur en utilisant le logiciel de réseau d'analyse de concentrateur de capteur et la pluralité de modules de capteur sur la base du signal de recommandation de commande.

3. Procédé selon la revendication 1, comprenant en outre :
la mise à jour, en utilisant le réseau d'analyse de concentrateur de capteur (510), du logiciel de réseau d'analyse de concentrateur de capteur (512) sur la base des données de capteur qui ont été reçues et analysées.

4. Procédé selon la revendication 1, dans lequel la pluralité de capteurs (590) comprend l'un ou plusieurs parmi un capteur de température, un capteur de vibration, un capteur de détection de liquide, un capteur de lumière, un capteur de son et un capteur de pression.

5. Procédé selon la revendication 1, dans lequel la pluralité d'étapes comprend l'une ou plusieurs parmi une étape d'emballage (421), une étape de transport (431), une étape de stockage (441), une étape de destination et une étape de conditionnement.

6. Procédé selon la revendication 5,
dans lequel l'étape d'emballage (421) comprend l'un ou plusieurs parmi l'emballage pour le transport, l'emballage pour la distribution, l'emballage pour la consommation, l'emballage primaire, l'emballage secondaire, l'emballage tertiaire, les caisses, les palettes, les boîtes, les sacs et l'emballage de produits individuels,
dans lequel l'étape de transport (431) comprend l'un ou plusieurs parmi une embarcation, un aéronef, un véhicule, un camion semi-remorque et un train, et
dans lequel l'étape de stockage (441) comprend l'une ou plusieurs parmi une installation de stockage, un entrepôt et une unité de stockage.

7. Système de chaîne du froid (500) comprenant :
une pluralité de capteurs (590) fournis au niveau d'une pluralité d'étapes du système de chaîne du froid ;
une pluralité de modules de capteur (520) chargés d'un logiciel d'analyse de concentrateur de capteur (525) et connectés à la pluralité de capteurs,
dans lequel l'un au moins de la pluralité de modules de capteur est fourni pour chacune de la pluralité d'étapes, et
dans lequel la pluralité de modules de capteur sont adaptés pour recevoir des données de capteur de la pluralité de capteurs ; et
un réseau d'analyse de concentrateur de capteur (510) connecté à la pluralité de modules de capteur,
dans lequel le réseau d'analyse de concentrateur de capteur est adapté pour recevoir et analyser les données de capteur de la pluralité de modules de capteur,
dans lequel le réseau d'analyse de concentrateur de capteur est adapté pour générer un signal de recommandation de commande sur la base des données de capteur et il est en outre adapté pour transmettre le signal de recommandation de commande à la pluralité de modules de capteur ;
**caractérisé en ce que** :
le chargement du logiciel de réseau d'analyse de concentrateur de capteur (525) sur l'un au moins de la pluralité de modules de capteur (520) comprend :
l'interrogation, en utilisant un logiciel de base de réseau d'analyse de concentrateur de capteur (512) chargé sur le réseau d'analyse de concentrateur de capteur, d'une connexion à un module de capteur (520) de la pluralité de modules de capteur ;
la connexion au module capteur en réponse à la détection de la connexion au module de capteur pendant l'interrogation ;
la réception d'une demande de la part du module de capteur pour charger le logiciel de réseau d'analyse de concentrateur de capteur en réponse à la connexion au module de capteur ;
la transmission du logiciel de réseau d'analyse de concentrateur de capteur au module de capteur en réponse à la réception de la demande ; et
l'installation du logiciel de réseau d'analyse de concentrateur de capteur sur le module de capteur en réponse à la réception du logiciel de réseau d'analyse de concentrateur de capteur.

8. Système de chaîne du froid (500) selon la revendication 7, dans lequel le système de chaîne du froid est commandé localement au niveau de l'une de la pluralité d'étapes sur la base du signal de recommandation de commande, ou est commandé au niveau du cloud par le réseau d'analyse de concentrateur de capteur (510) en utilisant le logiciel de réseau d'analyse de concentrateur de capteur (525) et la pluralité de modules de capteur (520) sur la base du signal de recommandation de commande.

9. Système de chaîne du froid (500) selon la revendication 7, comprenant en outre :
le logiciel de réseau d'analyse de concentrateur de capteur mis à jour qui est mis à jour à l'aide du réseau d'analyse de concentrateur de capteur sur la base des données de capteur qui ont été reçues et analysées.

10. Système de chaîne du froid (500) selon la revendication 7, dans lequel la pluralité de capteurs (590) comprend l'un ou plusieurs parmi un capteur de température, un capteur de vibration, un capteur de détection de liquide, un capteur de lumière, un capteur de son et un capteur de pression.

11. Système de chaîne du froid (500) selon la revendication 7, dans lequel la pluralité d'étapes comprend l'une ou plusieurs parmi une étape d'emballage (421), une étape de transport (431), une étape de stockage (441), une étape de destination et une étape de conditionnement.

12. Système de chaîne du froid (500) selon la revendication 11,
dans lequel l'étape d'emballage (421) comprend l'un ou plusieurs parmi l'emballage pour le transport, l'emballage pour la distribution, l'emballage pour la consommation, l'emballage primaire, l'emballage secondaire, l'emballage tertiaire, les caisses, les palettes, les boîtes, les sacs et l'emballage de produits individuels,
dans lequel l'étape de transport (431) comprend l'un ou plusieurs parmi une embarcation, un aéronef, un véhicule, un camion semi-remorque et un train, et
dans lequel l'étape de stockage (441) comprend l'une ou plusieurs parmi une installation de stockage, un entrepôt et une unité de stockage.

13. Système de chaîne du froid (500) selon la revendication 7, dans lequel le réseau d'analyse de concentrateur de capteur (510) est déployé à l'aide d'une infrastructure de cloud (505) qui comprend un serveur connecté via un réseau informatique cloud à la pluralité de modules de capteur (590).

14. Un ou plusieurs supports de stockage lisibles par ordinateur dans lesquels sont incorporées des instructions de programme, les instructions de programme pouvant être exécutées par un ou plusieurs processeurs pour amener les processeurs à exécuter le procédé selon la revendication 1.

15. Un ou plusieurs supports de stockage lisibles par ordinateur selon la revendication 14, dans lesquels le support de stockage lisible par ordinateur comprend des instructions de programme supplémentaires incorporées à celui-ci, dans lequel les instructions de programme supplémentaires exécutables par les un ou plusieurs processeurs (101) amènent les processeurs à :
afficher l'un ou plusieurs parmi les données de capteur, les données de capteur analysées et le signal de recommandation de commande à un utilisateur du système de chaîne du froid (500) ; et
mettre à jour, en utilisant le réseau d'analyse de concentrateur de capteur (510), le logiciel de réseau d'analyse de concentrateur de capteur (525) sur la base des données de capteur qui ont été reçues et analysées.
